# EUROPEAN PATENT SPECIFICATION

(11) **EP 3 459 996 B1**
(45) Date of publication and mention of the grant of the patent: **09.12.2026**
(21) Application number: 17799119.7
(22) Date of filing: 21.04.2017
(51) Int. Cl.: C08L 21/00, C08K 5/09, C08K 5/20, C08L 101/12, C08L 9/00, B60C 1/00

(54) **RUBBER COMPOSITION**
KAUTSCHUKZUSAMMENSETZUNG
COMPOSITION DE CAOUTCHOUC

(30) Priority: 16.05.2016 JP 2016098026
(43) Date of publication of application: 27.03.2019
(73) Proprietor: SUMITOMO RUBBER INDUSTRIES, LTD., Kobe-shi, Hyogo 651-0072 (JP)
(72) Inventor: MIYAZAKI, Tatsuya, Kobe-shi Hyogo 651-0072 (JP)
(74) Representative: TBK
(86) International application number: PCT/JP2017/016048
(87) International publication number: WO 2017/199688

(56) References cited:
- EP-A1- 2 570 275
- EP-A1- 2 716 700
- EP-A1- 2 949 695
- EP-A1- 3 064 544
- EP-A1- 3 459 999
- WO-A1-2018/110456
- JP-A- 2009 263 403
- JP-A- 2010 254 166
- JP-A- 2015 098 561
- DATABASE CA [online] CHEMICAL ABSTRACTS SERVICE, COLUMBUS, OHIO, US; 11 November 2010 (2010-11-11), TSUNENISHI, YOHEI ET AL: "Rubber compositions with good abrasion and fatigue resistance and rubber crawlers having their protrusions inside", XP002796432, retrieved from STN Database accession no. 2010:1400265
- DATABASE CA [online] CHEMICAL ABSTRACTS SERVICE, COLUMBUS, OHIO, US; 12 November 2009 (2009-11-12), TSUNENISHI, YOHEI: "Fatty amide-containing rubber compositions and their rubber crawlers", XP002796433, retrieved from STN Database accession no. 2009:1398899
- DATABASE CA [online] CHEMICAL ABSTRACTS SERVICE, COLUMBUS, OHIO, US; 22 June 2018 (2018-06-22), MIYAZAKI, TATSUYA: "Rubber composition for tire", XP002796434, retrieved from STN Database accession no. 2018:1173816

## Description

### TECHNICAL FIELD

The present invention relates to a tire comprising a tire member, which is a tread, an under tread, a carcass, or a side wall and which is composed of a rubber composition.

### BACKGROUND OF THE INVENTION

So far rubber products such as tires have been produced by vulcanizing an unvulcanized rubber composition obtained by kneading compounding components. While the vulcanizing is conducted by heating and pressurizing with a vulcanization metal mold, if excessive adhesion of the rubber composition to the vulcanization metal mold occurs, it may result in rejected products or occurrence of contamination of the metal mold.

In a rubber composition for treads of a racing tire and a studless tire, low viscosity compounding is used for the purpose of enhancing tire performances such as grip performance and performance on ice. However, in a process for manufacturing a rubber composition using low viscosity compounding, excessive adhesion of the rubber composition to a kneader and a vulcanizer is easy to arise, which tends to decrease productivity. Further, a kneading torque is hard to act on dispersion of a filler in the rubber composition and dispersibility of a filler decreases easily. In order to solve these problems, there is a method of compounding a mold releasing agent. However, if lubricity to be imparted to a rubber composition, inhibition of blooming on a rubber surface and dispersibility of a filler are not satisfactory, there is a problem that abrasion resistance of a tire and grip performance are lowered.

Patent Document 1 describes a rubber composition assuring that contamination of a metal mold is inhibited by compounding a given mold releasing agent while maintaining abrasion resistance and wet grip performance.

### Patent Document

Patent Document 1: JP 2015-232110 A

### SUMMARY OF THE INVENTION

### PROBLEM TO BE SOLVED BY THE INVENTION

In a mold releasing agent described in Patent Document 1, there is a problem that mold release characteristic is insufficient in the case of a rubber composition using low viscosity compounding such as rubber compositions for racing tires and studless tires. Further, improvement of dispersibility of a filler and enhancement of tire performance by means of a mold releasing agent are not taken into consideration.

An object of the present invention is to provide a tire comprising a tire member, which is a tread, an under tread, a carcass, or a side wall and which is composed of a rubber composition being excellent in processability, mold release characteristics, abrasion resistance and wet grip performance.

### MEANS TO SOLVE THE PROBLEM

It was found that dispersion of a filler in a rubber composition is improved and rubber characteristics are enhanced by compounding a predetermined fatty acid amide and adhesive resin, and thus the present invention has been completed. Namely, the present invention relates to a tire comprising a tire member, which is a tread, an under tread, a carcass, or a side wall and which is composed of a rubber composition comprising 0.1 to 10 parts by mass of ω-9 fatty acid amide (preferably 0.2 to 8 parts by mass, more preferably 0.3 to 5 parts by mass) and 0.1 to 100 parts by mass (preferably 1.0 to 80 parts by mass, more preferably 2.0 to 70 parts by mass) of an adhesive resin based on 100 parts by mass of a rubber component, wherein the adhesive resin is at least one selected from the group consisting of a phenolic resin, a coumarone-indene resin, a terpene resin, a styrene resin, an acrylic resin, and a rosin resin.

It is preferable that the rubber composition comprises the ω-9 fatty acid amide in the form of a molten mixture comprising the ω-9 fatty acid amide and calcium stearate.

It is preferable that the molten mixture is a molten mixture comprising 25 to 75% by mass (more preferably 40 to 60% by mass) of ω-9 fatty acid amide and 25 to 75% by mass (more preferably 40 to 60% by mass) of calcium stearate.

It is preferable that the rubber composition comprises an adhesive resin having a softening point of 130°C or lower and at least one of a process oil and a liquid polymer, wherein a total content of the adhesive resin having a softening point of 130°C or lower, the process oil and the liquid polymer is not less than 20 parts by mass, more preferably 20 to 100 parts by mass, more preferably not less than 22 parts by mass, more preferably 22 to 90 parts by mass.

It is preferable that the rubber composition comprises not less than 9 parts by mass (more preferably not less than 10 parts by mass) of the process oil, from a point that an effect of the present invention can be exhibited more.

### EFFECT OF THE INVENTION

The rubber composition composing the tire member of the tire of the present invention comprising predetermined amounts of ω-9 fatty acid amide and an adhesive resin, which is at least one selected from the group consisting of a phenolic resin, a coumarone-indene resin, a terpene resin, a styrene resin, an acrylic resin, and a rosin resin, based on 100 parts by mass of a rubber component is excellent in processability, mold release characteristics, abrasion resistance and wet grip performance.

### EMBODIMENT FOR CARRYING OUT THE INVENTION

The rubber composition composing the tire member of the tire of the present disclosure (hereinafter also simply referred to as rubber composition of the present disclosure) comprises the ω-9 fatty acid amide and the adhesive resin.

The rubber component is not limited particularly, and examples thereof include diene rubber components such as isoprene rubbers including natural rubber (NR) and polyisoprene rubber (IR), butadiene rubber (BR), styrene-butadiene copolymer rubber (SBR), styrene-isoprene-butadiene copolymer rubber (SIBR), chloroprene rubber (CR) and acrylonitrile-butadiene copolymer rubber (NBR), and butyl rubber. These rubber components may be used alone or may be used in combination of two or more thereof. It is particularly preferable that the rubber component comprises SBR and BR from the viewpoint of a balance of fuel efficiency, abrasion resistance, durability and wet grip performance.

A styrene-butadiene rubber (SBR) is not limited particularly, and examples thereof include an emulsion-polymerized SBR (E-SBR) and a solution-polymerized SBR (S-SBR). The SBR may be oil-extended or may not be oil-extended. Particularly an oil-extended and high molecular weight SBR is preferable from the viewpoint of grip performance. Further, a terminal-modified S-SBR and a main chain-modified S-SBR which have enhanced capability to interact with a filler can also be used. These SBRs may be used alone or may be used in combination of two or more thereof.

A styrene content of the SBR is preferably not less than 12% by mass, more preferably not less than 20% by mass, further preferably not less than 25% by mass, particularly preferably not less than 30% by mass, from the viewpoint of grip performance. When the styrene content is too large, styrene groups become in proximity to each other, a polymer becomes too hard and crosslinking becomes non-uniform, which may deteriorate blowing property during running at high temperature, and further there is a tendency that since temperature dependency of the performances is increased and the performances can be changed largely with respect to a temperature change, stable grip performance cannot be obtained at a middle/latter stage of running. Therefore, the styrene content is preferably not more than 60% by mass, more preferably not more than 50% by mass, further preferably not more than 40% by mass. It is noted that the styrene content of the SBR as used herein is calculated in accordance with ¹H-NMR measurement.

A vinyl content of the SBR is preferably not less than 10 mol%, more preferably not less than 15 mol%, from the viewpoint of a hardness (Hs) of the rubber composition and grip performance. On the other hand, from the viewpoint of grip performance, EB (durability) and abrasion resistance, the vinyl content of the SBR is preferably not more than 90 mol%, more preferably not more than 80 mol%, further preferably not more than 70 mol%, particularly preferably not more than 60 mol%. It is noted that the vinyl content of the SBR (an amount of 1,2-bond butadiene unit) as used herein can be determined by an infrared absorption spectrum analysis method.

A glass transition temperature (Tg) of the SBR is preferably not lower than -70°C, more preferably not lower than -40°C. The Tg is preferably not higher than 10°C, and the Tg is more preferably not higher than 5°C from the viewpoint of prevention of a crack due to embrittlement during a winter season in the Temperate Zone. It is noted that a glass-transition temperature of the SBR as used herein is a value measured by conducting a differential scanning calorimetry measurement (DSC) under the condition of a temperature elevation rate of 10°C/ minute in accordance with JIS K 7121.

A weight-average molecular weight (Mw) of the SBR is preferably not less than 700,000, more preferably not less than 900,000, further preferably not less than 1,000,000 from the viewpoint of grip performance and blowing property. On the other hand, the weight-average molecular weight is preferably not more than 2,000,000, more preferably not more than 1,800,000 from the viewpoint of blowing property, namely dispersion of a filler and uniformity of crosslinking. It is noted that the weight-average molecular weight of the SBR as used herein can be calibrated with standard polystyrene based on measurement values determined with a gel permeation chromatography (GPC) (GPC-8000 series manufactured by Tosoh Corporation; detector: differential refractometer; column: TSKGEL SUPERMALTPORE HZ-M manufactured by Tosoh Corporation).

An SBR content in the rubber component is preferably not less than 40% by mass, more preferably not less than 50% by mass, for the reason that a sufficient grip performance can be obtained. The SBR content is particularly preferably not less than 80% by mass in the case of a racing tire, and is preferably 100% by mass from the viewpoint of grip performance. It is noted that in the case where two or more kinds of SBRs are used in combination, a total content of the whole SBRs is a content of SBR in the rubber component of the present disclosure.

Examples of usable BR includes, but are not limited to, BR with a high cis content such as BR1220 manufactured by Zeon Corporation and BR130B and BR150B manufactured by Ube Industries, Ltd.; modified BR such as BR1250H manufactured by Zeon Corporation; BR containing syndiotactic polybutadiene crystals such as VCR412 and VCR617 manufactured by Ube Industries, Ltd.; and BR synthesized using a rare earth element catalyst, such as BUNA-CB25 manufactured by Lanxess K.K. These BRs may be used alone or may be used in combination of two or more thereof. Among them, BR synthesized using a rare earth element catalyst (rare-earth-based BR) is preferable from the viewpoint of fuel efficiency and abrasion resistance.

The rare-earth-based BR is a butadiene rubber synthesized using a rare earth element catalyst, and has a characteristic that the cis content is high and the vinyl content is low. As the rare-earth-based BR, one commonly used in tire manufacturing can be used.

As the rare-earth-based catalyst used for synthesis of the rare-earth-based BR, a well-known one in the related art can be used, and examples thereof include catalysts containing lanthanum-series rare earth element compounds, organoaluminium compounds, aluminoxanes, halogen-containing compounds, and Lewis bases if necessary. Among these, Nd-based catalysts using neodymium (Nd)-containing compounds as the lanthanum-series rare earth element compound are particularly preferable.

Examples of the lanthanum-series rare earth element compounds include halides, carboxylates, alcoholates, thioalcoholates, and amides of rare earth metals with atomic numbers 57-71. Among these, the Nd-based catalyst is preferable because BR with a high cis content and a low vinyl content can be obtained therefrom.

Examples of the usable organoaluminium compounds include AlR^{a}R^{b}R^{c} (where R^{a}, R^{b}, and R^{c} are the same or different and each represent hydrogen or a hydrocarbon group having 1 to 8 carbon atoms). Examples of the aluminoxane include chained aluminoxanes and cyclic aluminoxanes. Examples of the halogen-containing compound include aluminum halides, represented by AlXₖR^{d}₃₋ₖ where X is a halogen, R^{d} is an alkyl group, an aryl group or an aralkyl group having 1 to 20 carbon atoms, and k is 1, 1.5, 2 or 3; strontium halides such as Me₃SrCl, Me₂SrCl₂, MeSrHCl₂, and MeSrCl₃; and metallic halides such as silicon tetrachloride, tin tetrachloride, and titanium tetrachloride. The Lewis base is used to complex the lanthanum-series rare earth element compound, and examples of the suitable Lewis base include acetyl acetone, ketone, alcohol, etc.

The rare earth element catalyst can be used in the state of being dissolved in an organic solvent (e.g. n-hexane, cyclohexane, n-heptane, toluene, xylene or benzene) or may be used while being supported on an appropriate carrier made of silica, magnesia, magnesium chloride, etc., when polymerizing butadiene. As the polymerization conditions, either solution polymerization or bulk polymerization may be conducted; a preferable polymerization temperature is from -30 to 150°C; and a polymerization pressure may be arbitrarily selected depending on other conditions.

The cis 1,4-bond content (cis content) in the rare-earth-based BR is preferably 90% by mass or more, more preferably 93% by mass or more, still more preferably 95% by mass or more, from the viewpoint of durability and abrasion resistance.

The vinyl content in the rare-earth-based BR is preferably 1.8 mol% or less, more preferably 1.5 mol% or less, further preferably 1.0 mol% or less, particularly preferably 0.8 mol% or less, from the viewpoint of durability and abrasion resistance. It should be noted that the vinyl content (1,2-bond butadiene unit amount) in the BR and the cis-content (cis 1,4-bond content) in the BR, described herein, can be measured by the infrared absorption spectrometry method.

When BR is contained, the content of the BR in the rubber component is preferably 10% by mass or more, more preferably 15% by mass or more, further preferably 20% by mass or more, from the viewpoint of abrasion resistance, grip performance and fuel efficiency. This content is preferably 70% by mass or less, more preferably 60% by mass or less from the viewpoint of abrasion resistance, grip performance and fuel efficiency, and is preferably 40% by mass or less in tires requiring adequate grip performance.

The rubber composition of the present disclosure is featured by comprising 0.1 to 10 parts by mass of ω-9 fatty acid amide (omega9 fatty acid amide) and 0.1 to 100 parts by mass of an adhesive resin based on 100 parts by mass of a rubber component. By combination use of ω-9 fatty acid amide and an adhesive resin, excessive adhesion of the rubber composition onto an apparatus such as a kneader or a vulcanization metal mold is inhibited and the rubber composition having excellent processability and mold release characteristics is obtained irrespective of low viscosity compounding and good abrasion resistance and wet grip performance.

Examples of ω-9 fatty acid amide include oleamide, eicosenoic acid amide, mead acid amide, erucic acid amide and nervonic acid amide. Among these, oleamide is preferable. While an unvulcanized rubber composition comprising a predetermined amount of an adhesive resin has a low viscosity, oleamide forms a thin amide bond film on a metal surface of an apparatus, thereby inhibiting the adhesive resin from strongly bonding to the metal surface. Thus, it can be considered that excessive adhesion of the rubber composition onto an apparatus such as a kneader or a vulcanization metal mold is inhibited. Further, it can be considered that oleamide is excellent in compatibility with a rubber component and compatibility with a resin as compared with other fatty acid amides, and therefore, exhibits an effect of the present invention.

The oleamide is a compound obtained by replacing hydroxyl of oleic acid with amino, and a structure thereof differs from those of fatty acid monoethanolamide and esters of fatty acid monoethanolamide contained in a mold releasing agent (e.g. WB16 available from Structol GmbH).

It is preferable that the rubber composition comprises ω-9 fatty acid amide as a molten mixture of ω-9 fatty acid amide and calcium stearate for the reason that the molten mixture can have a transparent melting point (60 to 120°C) allowing the mixture to be easily dispersed in a step of kneading the rubber composition though the mixture is a solid and that mold release characteristics and processability are enhanced. It can be considered that when the rubber composition comprises ω-9 fatty acid amide as a molten mixture of ω-9 fatty acid amide and calcium stearate, physical mold release characteristics are enhanced, and synergistic action of the physical mold release characteristics and the mold release characteristics by the amide bond film occurs, thereby exhibiting an effect of the present invention.

The molten mixture can be prepared by, for example, mixing ω-9 fatty acid amide (a transparent melting point: 74°C) and calcium stearate (a transparent melting point: 154°C) and heating the both compounds until the melting temperatures thereof are reached. This mixing method is not limited particularly, and there is, for example, a method of stirring the compounds with a stirrer in a silicon oil bath.

It is preferable, from the viewpoint of exhibiting an effect of the present invention remarkably, that the molten mixture comprises 25 to 75% by mass of ω-9 fatty acid amide and 25 to 75% by mass of calcium stearate, more preferably 40 to 60% by mass of ω-9 fatty acid amide and 40 to 60% by mass of calcium stearate.

A content of the ω-9 fatty acid amide based on 100 parts by mass of the rubber component is not less than 0.1 part by mass, preferably not less than 0.2 part by mass, more preferably not less than 0.3 part by mass. When the content of the ω-9 fatty acid amide is less than 0.1 part by mass, there is a tendency that an effect of improving processability and mold releasing property will be insufficient. Further, the content of the ω-9 fatty acid amide is not more than 10 parts by mass, preferably not more than 8 parts by mass, more preferably not more than 5 parts by mass. When the content of the ω-9 fatty acid amide is more than 10 parts by mass, there is a tendency that a crosslinking density decreases and Hs decreases.

Among the above-mentioned adhesive resins, there are resins for the purpose of imparting adhesive property at the time of rubber processing and lamination of rubbers, and resins for the purpose of enhancing adhesive grip property with a road surface during running . The adhesive resin usually has a property of compatible with a rubber component or at least semi-compatible with a rubber component after vulcanization, and is an oligomer having a molecular weight of several hundreds to several ten thousands. The adhesive resin is at least one selected from the group consisting of a phenolic resin, a coumarone-indene resin, a terpene resin, a styrene resin, an acrylic resin, and a rosin resin. Examples of the phenolic resin include Koreshin (available from BASF Japan) and TACKIROL (available from Taoka Chemical Co., Ltd.). Examples of coumarone-indene resin include Esukuron (available from Nippon Steel & Sumikin Chemical Co., Ltd.) and Neo Polymer (available from JXTG Nippon Oil & Energy Corporation). Examples of a styrene resin include Sylvatraxx 4401 (available from Arizona Chemical Company, LLC). Examples of a terpene resin include TR7125 (available from Arizona Chemical Company, LLC) and TO125 (available from Yasuhara Chemical Co., Ltd.). These adhesive resins may be used alone or may be used in combination of two or more thereof. Among these, a phenolic resin, a coumarone-indene resin, a terpene resin and an acrylic resin are preferably used.

A softening point of the adhesive resin is preferably 0°C or higher from the viewpoint of grip performance. On the other hand, the softening point of the adhesive resin is preferably 170°C or lower, more preferably 160°C or lower, still more preferably 145°C or lower, further preferably 135°C or lower. In the present disclosure, the softening point of the resin is one specified in JIS K6220-1: 2001 and is a temperature at the time when the ball has dropped on a bottom plate in the measurement with the ring and ball softening point measuring device.

A glass transition temperature (Tg) of the adhesive resin is preferably -35°C or higher, more preferably 30°C or higher from the viewpoint of compatibility with the rubber component. On the other hand, the Tg of the adhesive resin is preferably 110°C or lower, more preferably 100°C or lower from the viewpoint of compatibility with the rubber component.

A content of the adhesive resin based on 100 parts by mass of the rubber component is not less than 0.1 part by mass, preferably not less than 1.0 part by mass, more preferably not less than 2.0 parts by mass. When the content of the adhesive resin is less than 0.1 part by mass, there is a tendency that an effect of improving abrasion resistance and wet grip performance becomes insufficient. On the other hand the content of the adhesive resin is not more than 100 parts by mass, preferably not more than 80 parts by mass, more preferably not more than 70 parts by mass. When the content of the adhesive resin is more than 100 parts by mass, there is a tendency that the Tg of the rubber composition becomes high and the Hs at low temperature becomes high, thereby deteriorating wet grip performance.

In addition to the above-mentioned components, the rubber composition according to the present disclosure can adequately comprise compounding agents having been generally used for manufacturing a rubber composition, for example, resin components other than the above-mentioned adhesive resin, process oil, a liquid polymer, a reinforcing filler, zinc oxide, stearic acid, palmitic acid, lauric acid, fatty acid zinc soap, an antioxidant, wax, a vulcanizing agent, and a vulcanization accelerator.

It is preferable that the rubber composition comprises the adhesive resin having a softening point of 130°C or lower and at least one of a process oil and a liquid polymer, and a total content of the adhesive resin having a softening point of 130°C or lower, a process oil and a liquid polymer is not less than 20 parts by mass. Thus, excessive adhesion is inhibited and an effect of the present invention can be exhibited more.

The adhesive resin having a softening point of 130°C or lower may be compounded separately from the adhesive resin contained in the rubber composition of the present disclosure as an essential component, or may be compounded as at least a part of the adhesive resin contained in the rubber composition of the present disclosure. The adhesive resin having a softening point of 130°C or lower is not limited particularly, and examples thereof include adhesive resins having been used for rubber products such as tires. It is noted that the adhesive resin having a softening point of 130°C or lower includes a liquid adhesive resin such as NOVARES C10 manufactured by Ruetgers Chemicals.

When the rubber composition comprises the adhesive resin having a softening point of 130°C or lower, a content thereof based on 100 parts by mass of the rubber component is preferably not less than 1 part by mass, more preferably not less than 2 parts by mass for the reason that excessive adhesion of the rubber composition to a rubber processing apparatus and a vulcanization metal mold is inhibited and an effect of the present invention can be exhibited more. On the other hand, the content of the resin is preferably not more than 100 parts by mass, more preferably not more than 90 parts by mass from the viewpoint of compatibility of abrasion resistance and grip performance.

The above-mentioned process oil and liquid polymer are not limited particularly, and process oils having been used for rubber products such as tires can be contained. When at least one of process oil and liquid polymer is contained, a content thereof based on 100 parts by mass of the rubber component is preferably not less than 9 parts by mass, more preferably not less than 10 parts by mass for the reason that excessive adhesion of the rubber composition due to low density compounding is inhibited and an effect of the present invention can be exhibited more. On the other hand, the content of the resin is preferably not more than 100 parts by mass, more preferably not more than 90 parts by mass from the viewpoint of compatibility of abrasion resistance and grip performance.

A total content of the adhesive resin having a softening point of 130°C or lower, the process oil and the liquid polymer is preferably not less than 20 parts by mass, more preferably not less than 22 parts by mass for the reason that excessive adhesion of the rubber composition due to low density compounding is inhibited and an effect of the present invention can be exhibited more. On the other hand, the total content of the resin is preferably not more than 100 parts by mass, more preferably not more than 90 parts by mass from the viewpoint of compatibility of abrasion resistance and grip performance.

A reinforcing filler is not limited particularly, and examples thereof include a white filler and carbon black.

Examples of the white filler include silica, aluminum hydroxide, alumina (aluminum oxide), calcium carbonate, and talc, and these white fillers can be used alone or can be used in combination of two or more thereof. It is preferable to contain at least one of silica and aluminum hydroxide for the reason that abrasion resistance, durability, wet grip performance and fuel efficiency are excellent.

A BET specific surface area of silica is preferably 70 to 300 m²/g, more preferably 80 to 280 m²/g, further preferably 90 to 250 m²/g from the viewpoint of abrasion resistance, wet grip performance and processability. It is noted that herein the BET specific surface area of silica is a value measured with the BET method according to ASTM D3037-81.

When the rubber composition comprises silica, the content thereof is preferably not less than 40 parts by mass, more preferably not less than 50 parts by mass based on 100 parts by mass of the rubber component from the viewpoint of wet grip performance. Further, from the viewpoint of processability and inhibition of shrinkage due to cooling after vulcanization and for securing stress at break (TB), the content of silica is preferably not more than 150 parts by mass, more preferably not more than 140 parts by mass based on 100 parts by mass of the rubber component.

Silica is preferably used in combination with a silane coupling agent. The silane coupling agent may be any silane coupling agents conventionally used in conjunction with silica in the rubber industry. Examples of the silane coupling agent include sulfide-based silane coupling agents such as bis(3-triethoxysilylpropyl) disulfide and bis(3-triethoxysilylpropyl) tetrasulfide; mercapto-based silane coupling agents such as 3-mercaptopropyltrimethoxysilane and NXT-Z100, NXT-Z45, and NXT manufactured and sold by Momentive Performance Materials (silane coupling agents having a mercapto group); vinyl-based silane coupling agents such as vinyltriethoxysilane; amino-based silane coupling agents such as 3-aminopropyltriethoxysilane; glycidoxy-based silane coupling agents such as γ-glycidoxypropyltriethoxysilane; nitro-based silane coupling agents such as 3-nitropropyltrimethoxysilane; and chloro-based silane coupling agents such as 3-chloropropyltrimethoxysilane. These silane coupling agents may be used alone or may be used in combination of two or more thereof.

When the rubber composition comprises the silane coupling agent, the content thereof is preferably 4.0 parts by mass or more, more preferably 6.0 parts by mass or more based on 100 parts by mass of silica for the reason that sufficient effects of improving dispersibility of fillers and decreasing a viscosity can be obtained. The content of the silane coupling agent is preferably 12 parts by mass or less, more preferably 10 parts by mass or less based on 100 parts by mass of silica, since when the content of the silane coupling agent exceeds 12 parts by mass, sufficient coupling effect and filler dispersing effect cannot be obtained and the reinforcing property deteriorates.

The BET specific surface area of aluminum hydroxide is preferably 5 m²/g or more, preferably 10 m²/g or more, more preferably 12 m²/g or more, from the viewpoint of wet grip performance. The BET specific surface area of aluminum hydroxide is preferably 50 m²/g or less, more preferably 45 m²/g or less, further preferably 40 m²/g or less, from the viewpoint of dispersibility of aluminum hydroxide, prevention of re-agglomeration and abrasion resistance. It is noted that the BET specific surface area of aluminum hydroxide as used herein is a value determined by measurement using the BET method in accordance with ASTM D3037-81.

The average particle size (D50) of aluminum hydroxide is preferably 0.1 µm or more, more preferably 0.2 µm or more, further preferably 0.3 µm or more, from the viewpoint of dispersibility of aluminum hydroxide, prevention of re-agglomeration and abrasion resistance. The average particle size (D50) of aluminum hydroxide is preferably 3.0 µm or less, more preferably 2.0 µm or less, from the viewpoint of abrasion resistance. It is noted that the average particle size (D50) as used herein refers to a particle size at a cumulative mass percentage of 50% in a particle-size distribution curve determined by a particle diameter distribution measurement apparatus.

When aluminum hydroxide is contained, a content of the aluminum hydroxide is preferably 1 part by mass or more, more preferably 2 parts by mass or more, further preferably 5 parts by mass or more, based on 100 parts by mass of the rubber component from the viewpoint of grip performance. The content of aluminum hydroxide is preferably 50 parts by mass or less, more preferably 45 parts by mass or less, further preferably 40 parts by mass or less from the viewpoint of abrasion resistance.

The nitrogen adsorption specific surface area (N₂SA) of the carbon black is preferably 80 m²/g or more, preferably 100 m²/g or more, more preferably 140 m²/g or more, further preferably 151 m²/g or more, particularly preferably 195 m²/g or more from the viewpoint of grip performance and abrasion resistance. Moreover, N₂SA is preferably 600 m²/g or less, more preferably 500 m²/g or less, further preferably 400 m²/g or less, from the viewpoint of ensuring satisfactory filler dispersibility. It is noted that a N₂SA of the carbon black can be determined by a BET method in accordance with JIS K 6217-2: 2001.

The content of carbon black is preferably 3 parts by mass or more based on 100 parts by mass of the rubber component for the reason of ensuring ultraviolet crack prevention performance. The preferred carbon black content varies depending on the grip performance, abrasion resistance, and fuel efficiency, expected for the tire. For treads of tires that ensure wet grip performance by using silica, such as general-purpose tires, the content of carbon black is preferably in a range of 5 to 30 parts by mass based on 100 parts by mass of the rubber component. For treads of tires that ensure dry grip performance and abrasion resistance by using carbon black, such as race tires, the content of carbon black is preferably in a range of 40 to 140 parts by mass based on 100 parts by mass of the rubber component.

The rubber composition according to the present disclosure can be manufactured by general methods. For example, the rubber composition can be manufactured by a method that involves kneading respective components, other than a vulcanizing agent and a vulcanization accelerator, with a known kneading machine commonly used in the rubber industry, such as a Banbury mixer, a kneader, or an open roll; then adding the vulcanizing agent and the vulcanization accelerator thereto, followed by further kneading a mixture; and subsequently vulcanizing the kneaded mixture.

The rubber composition of the present disclosure is used for a tire member, which is a tread, an under tread, a carcass, or a side wall. In particular, a tire having a tread composed of the rubber composition of the present disclosure is preferable and a race tire and a studless tire are more preferable since the tire has excellent abrasion resistance.

A tire produced using the rubber composition of the present disclosure can be produced by a usual method using the above-mentioned rubber composition. Namely, the tire can be produced by subjecting the rubber composition prepared by compounding the above-mentioned additives with the diene rubber component according to necessity, to extrusion processing to a shape of e.g. a tread, and then laminating together with other tire members on a tire building machine and forming by a usual forming method, thus forming an unvulcanized tire, and heating and compressing this unvulcanized tire in a vulcanizer.

### EXAMPLE

The present invention will be described based on Examples, but the present invention is not limited thereto only.

A variety of chemicals used in Examples and Comparative Examples will be explained below.
Oleamide: ALFLOW E-10 (transparent melting point: 74°C) manufactured by NOF CORPORATION
Calcium stearate: CALCIUM STEARATE G (transparent melting point: 154°C) manufactured by NOF CORPORATION
Calcium 12-hydroxystearate: Calcium Castor Stearate (transparent melting point: 152°C) manufactured by NOF CORPORATION
Stearamide: ALFLOW S-10 (transparent melting point: 103°C) manufactured by NOF CORPORATION
Erucamide: ALFLOW P-10 (transparent melting point: 82°C) manufactured by NOF CORPORATION
SBR1: N9548 manufactured by ZEON Corporation (oil extended amount: 37.5 parts, styrene content: 35% by mass, vinyl content: 18%, Tg: -40°C, weight-average molecular weight: 1,090,000)
SBR2: NS612 manufactured by ZEON Corporation (non-oil extended, styrene content: 15% by mass, vinyl content: 30%, Tg: -65°C, weight-average molecular weight: 780,000)
BR: CB24 manufactured by Lanxess K.K. (high-cis BR synthesized using an Nd-based catalyst, Tg: -110°C)
Carbon black: SHOBLACK N220 available from Cabot Japan K.K. (N₂SA: 114 m²/g)
Silica 1: ULTRASIL VN3 manufactured by Evonik Degussa GmbH (N₂SA: 175 m²/g)
Silica 2: Z115Gr available from Rhodia Japan, Ltd. (N₂SA: 115 m²/g)
Silane coupling agent 1: Si75 (bis(3-triethoxysilylpropyl)disulfide) manufactured by Evonik Degussa GmbH
Aluminum hydroxide: APYRAL200SM (average particle size: 0.6 µm, N₂SA: 15 m²/g) manufactured by Sumitomo Chemical Co., Ltd.
Adhesive resin 1: Koreshin available from BASF Japan (phenolic resin, softening point: 145°C, Tg: 98°C)
Adhesive resin 2: YS POLYSTER T160 (terpene phenol resin, softening point: 160°C, Tg: 100°C) manufactured by Yasuhara Chemical Co., Ltd.
Adhesive Resin 3: YS RESIN TO125 (aromatic terpene resin, softening point: 125°C, Tg: 64°C) manufactured by Yasuhara Chemical Co., Ltd.
Adhesive resin 4: Sylvatraxx4401 (α-methylstyrene resin, softening point: 85°C, Tg: 43°C) manufactured by Arizona Chemical Company, LLC
Adhesive Resin 5: NOVARES C10 (liquid coumarone-indene resin, softening point: 10°C, Tg: -30°C) manufactured by Ruetgers Chemicals Non-adhesive resin 1: 40MS available from Struktol GmH (styrene-ethylene-propylene copolymer resin, softening point: 102°C, Tg: 62°C)
Non-adhesive resin 2: PR12686 (softening point: 93°C, Tg: 51°C) manufactured by Sumitomo Bakelite Co., Ltd.
Non-adhesive Resin 3: MODIPER A1100 (polyethylene-polystyrene resin, softening point: 111°C, Tg: 85°C) manufactured by NOF CORPORATION.
Non-adhesive resin 4: M-890A (DCPD petroleum resin, softening point: 115°C, Tg: 89°C) manufactured by MARUZEN PETROCHEMICAL CO., LTD.
Process oil: Diana Process Oil manufactured by Idemitsu Kosan Co., Ltd.
Caster oil: Industrial castor oil No. 1 manufactured by HOKOKU CORPORATION
Liquid polymer: L-SBR820 (Liquid SBR, Mw: 10,000) manufactured by KURARAY CO., LTD.
Molten mixtures 1 to 11: each of molten mixtures prepared in accordance with Preparation of Molten mixtures mentioned later
Stearic acid: Ginrei R manufactured by Toho Zinc Co., Ltd.
Zinc sterate: Zinc stearate manufactured by NOF CORPORATION
Mold release agent 1: EF44 (fatty acid zinc, transparent melting point: 103°C) available from Struktol GmH
Mold release agent 2: WB16 (a mixture of fatty acid calcium salt, fatty acid monoethanol amide and an ester of fatty acid monoethanol amide, transparent melting point: 101°C) available from Struktol GmH
Mold release agent 3: Aflux37 (transparent melting point: 100°C) manufactured by Rhein Chemie Corporation
Antioxidant 1: ANTIGENE 6C (6PPD, N-(1,3-dimethylbutyl)-N'-phenyl-p-phenylenediamine) manufactured by Sumitomo Chemical Company, Limited.
Antioxidant 2: NOCRAC 224 (TMQ, 2,2,4-trimehtyl-1,2-dihydroquinolene polymer) manufactured by OUCHI SHINKO CHEMICAL INDUSTRIAL CO., LTD.
Wax: Ozoace 355 manufactured by Nippon Seiro Co., Ltd.
Zinc oxide: Zinc Oxide Class 2 manufactured by Mitsui Mining & Smelting Co., Ltd.
Sulfur: HK-200-5 (oil content: 5% by mass) manufactured by Hosoi Chemical Industry Co., Ltd.
Crosslinking resin: TACKIROL 201 (alkylphenol-formaldehyde resin) manufactured by Taoka Chemical Co., Ltd.
Vulcanization accelerator 1: Nocceler NS-G (TBBS, N-tert-butyl-2-benzothiazolesulfenamide) manufactured by Ouchi Shinko Chemical Industrial Co., Ltd.
Vulcanization accelerator 2: Nocceler D (DPG, 1,3-diphenylguanidine) manufactured by Ouchi Shinko Chemical Industrial Co., Ltd.

### Preparation of molten mixtures

A flask containing compounds shown in Table 1 was dipped into a silicon oil bath, followed by stirring with an electronic stirrer while heating up until the both compounds were melted, and then an obtained molten product was taken out, cooled and pulverized in a mortar to obtain uniform molten mixtures 1 to 11. Table 1 also shows transparent melting points of the respective molten mixtures. These transparent melting points are values measured according to "Test methods for melting point and melting range of chemical products" of JIS K 0064: 1992.

**Table 1**

| | Molten mixture | | | | | | | | | | |
|---|---|---|---|---|---|---|---|---|---|---|---|
| | 1 | 2 | 3 | 4 | 5 | 6 | 7 | 8 | 9 | 10 | 11 |
| Compounding amount (% by mass) | | | | | | | | | | | |
| Oleamide | - | 10 | 25 | 50 | 75 | 100 | 50 | - | - | - | - |
| Calcium stearate | 100 | 90 | 75 | 50 | 25 | - | - | - | 50 | - | 50 |
| Calcium 12-hydroxystearate | - | - | - | - | - | - | 50 | - | - | - | - |
| Stearamide | - | - | - | - | - | - | - | 100 | 50 | - | - |
| Erucamide | - | - | - | - | - | - | - | - | - | 100 | 50 |
| Transparent melting point (°C) | 154 | 138 | 120 | 88 | 80 | 74 | 126 | 103 | 119 | 82 | 96 |

### Examples and Comparative Examples

According to compounding formulations shown in Tables 2 to 6, chemicals except sulfur and a vulcanization accelerator were kneaded with a 1.7-liter sealed Banbury mixer at a discharge temperature of 160°C for 5 minutes to obtain a kneaded product. Further, the obtained kneaded product was kneaded again with the 1.7-liter sealed Banbury mixer at a discharge temperature of 150°C for four minutes (re-milling). Subsequently by using a biaxial open roll, sulfur and a vulcanization accelerator were added to the obtained kneaded product, and a mixture was kneaded for four minutes until a temperature of the mixture became 105°C to obtain an unvulcanized rubber composition. The obtained unvulcanized rubber composition was subjected to press-vulcanization at 170°C for 12 minutes to produce a test rubber composition.

Each of the unvulcanized rubber compositions obtained according to compounding formulations shown in Tables 2 to 6 was extrusion-molded into a form of a tread using an extruder with an extrusion nozzle having a specific shape, and an extrudate was laminated with other tire members to form an unvulcanized tire, followed by press-vulcanization at 170°C for 12 minutes to produce a test tire. The following evaluations were made using the obtained unvulcanized rubber compositions, test rubber compositions and test tires. The results of the evaluations are shown in Tables 2 to 6.

### Index of viscosity

A Mooney viscosity (ML₁₊₄) of each of the unvulcanized rubber compositions after the re-milling was determined under the temperature condition of 130°C according to JIS K 6300-1 "Unvulcanized rubber - Physical properties - Part. 1: Method for measuring viscosity and scorch time using a Mooney viscometer". The result is shown by an index, assuming an inverse number of a Mooney viscosity of Comparative Example 1 to be 100. As the index is larger, the Mooney viscosity is lower. A performance target value is 100 or more.

### Index of mold release characteristics

A degree of adhesion of the unvulcanized rubber composition onto a rotor metal and a mixer inner wall after kneading with a 1.7-liter Banbury mixer was evaluated visually and with a peeling time. The result is shown by an index, assuming release characteristics of Comparative Example 1 to be 100. As the index is larger, the release characteristics is lower. A performance target value is 105 or more.

### Index of abrasion resistance

Each of the test tires was loaded on four wheels of a test vehicle (a domestic FF vehicle, displacement: 2,000 cc) and after in-vehicle running of 8,000 km on a dry asphalt road surface, a depth of the groove of each tire tread portion was measured. A traveling distance in which a groove depth of a tire was decreased by 1 mm was calculated. Assuming that an abrasion resistance index of Comparative Example 1 is 100, a result of each compounding formulation is indicated by an index with the following equation (abrasion resistance index). The larger the abrasion resistance index is, the more excellent the abrasion resistance is. A performance target value is 100 or more. 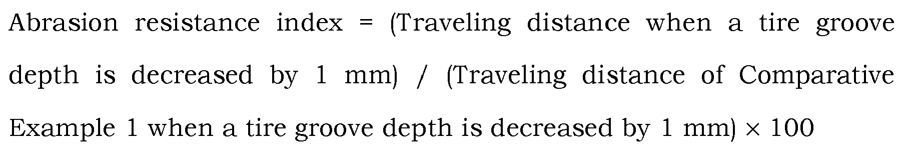 Abrasion resistance index = (Traveling distance when a tire groove depth is decreased by 1 mm) / (Traveling distance of Comparative Example 1 when a tire groove depth is decreased by 1 mm) × 100

### Index of wet grip performance

Each of the test tires was loaded on four wheels of a test vehicle (a domestic FF vehicle, displacement: 2,000 cc). A braking distance after braking at an initial speed of 100 km/hr on a wet asphalt road was measured. The wet grip performance was indicated with an index in accordance with the following equation, assuming the wet grip performance of Comparative Example 1 to be 100. The larger the index of the wet grip performance is, the more excellent the wet grip performance is. A lowest target value for performance is not less than 100, and 105 or more is more preferable. 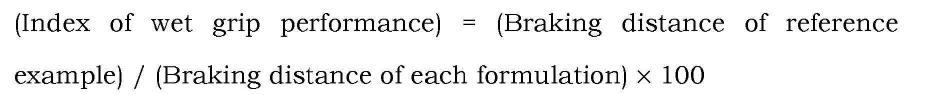 (Index of wet grip performance) = (Braking distance of reference example) / (Braking distance of each formulation) × 100

**Table 2**

| | Comparative Example | | | | | | | | | | |
|---|---|---|---|---|---|---|---|---|---|---|---|
| | 1 | 2 | 3 | 4 | 5 | 6 | 7 | 8 | 9 | 10 | 11 |
| Compounding amount (part by mass) | | | | | | | | | | | |
| SBR 1 | 41.25 | 41.25 | 41.25 | 41.25 | 41.25 | 41.25 | 41.25 | 41.25 | 41.25 | 41.25 | 41.25 |
| SBR 2 | 30 | 30 | 30 | 30 | 30 | 30 | 30 | 30 | 30 | 30 | 30 |
| BR | 40 | 40 | 40 | 40 | 40 | 40 | 40 | 40 | 40 | 40 | 40 |
| Carbon black | 5 | 5 | 5 | 5 | 5 | 5 | 5 | 5 | 5 | 5 | 5 |
| Silica 1 | 110 | 110 | 110 | 110 | 110 | 110 | 110 | 110 | 110 | 110 | 110 |
| Silica 2 | - | - | - | - | - | - | - | - | - | - | - |
| Silane coupling agent | 8.8 | 8.8 | 8.8 | 8.8 | 8.8 | 8.8 | 8.8 | 8.8 | 8.8 | 8.8 | 8.8 |
| Aluminum hydroxide | - | - | - | - | - | - | - | - | - | - | - |
| Adhesive resin 1 | - | - | - | - | - | - | - | 20 | 20 | - | - |
| Adhesive resin 2 | - | - | - | - | - | - | - | - | - | - | - |
| Adhesive resin 3 | - | - | - | - | - | - | - | 20 | 29 | - | - |
| Adhesive resin 4 | 10 | 10 | 10 | 10 | 10 | 10 | 10 | - | - | 10 | 10 |
| Adhesive resin 5 | - | - | - | - | - | - | - | - | - | - | - |
| Process oil | 39 | 39 | 39 | 39 | 39 | 39 | 39 | 9 | - | 39 | 39 |
| Liquid polymer | - | - | - | - | - | - | - | - | - | - | - |
| Molten mixture 1 | - | - | - | - | - | 3 | - | - | - | - | - |
| Molten mixture 2 | - | - | - | - | - | - | - | - | - | - | - |
| Molten mixture 3 | - | - | - | - | - | - | - | - | - | - | - |
| Molten mixture 4 | - | - | - | - | - | - | - | - | - | - | - |
| Molten mixture 5 | - | - | - | - | - | - | - | - | - | - | - |
| Molten mixture 6 | - | - | - | - | - | - | - | - | - | - | - |
| Molten mixture 7 | - | - | - | - | - | - | - | - | - | - | - |
| Molten mixture 8 | - | - | - | - | - | - | - | - | - | 3 | - |
| Molten mixture 9 | - | - | - | - | - | - | 3 | - | - | - | - |
| Molten mixture 10 | - | - | - | - | - | - | - | - | - | - | 3 |
| Molten mixture 11 | - | - | - | - | - | - | - | - | - | - | - |
| Stearic acid | 2 | 2 | 2 | 2 | 5 | 2 | 2 | 2 | 2 | 2 | 2 |
| Zinc stearate | - | - | - | 3 | - | - | - | - | - | - | - |
| Mold releasing agent 1 | - | - | 3 | - | - | - | - | - | - | - | - |
| Mold releasing agent 2 | 3 | - | - | - | - | - | - | 3 | 3 | - | - |
| Mold releasing agent 3 | - | 3 | - | - | - | - | - | - | - | - | - |
| Antioxidant 1 | 2 | 2 | 2 | 2 | 2 | 2 | 2 | 2 | 2 | 2 | 2 |
| Antioxidant 2 | 1 | 1 | 1 | 1 | 1 | 1 | 1 | 1 | 1 | 1 | 1 |
| Wax | 1.5 | 1.5 | 1.5 | 1.5 | 1.5 | 1.5 | 1.5 | 1.5 | 1.5 | 1.5 | 1.5 |
| Zinc oxide | 2 | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 | 1.5 |
| Vulcanization accelerator 1 | 1.3 | 1.3 | 1.3 | 1.3 | 1.3 | 1.3 | 1.3 | 1.3 | 1.3 | 1.3 | 1.3 |
| Vulcanization accelerator 2 | 2.5 | 2.5 | 2.5 | 2.5 | 2.5 | 2.5 | 2.5 | 2.5 | 2.5 | 2.5 | 2.5 |

| Evaluation | | | | | | | | | | | |
|---|---|---|---|---|---|---|---|---|---|---|---|
| Index of viscosity | 100 | 100 | 91 | 89 | 94 | 104 | 100 | 111 | 116 | 104 | 114 |
| Index of mold release characteristics | 100 | 100 | 94 | 100 | 108 | 100 | 112 | 95 | 97 | 110 | 94 |
| Index of abrasion resistance | 100 | 101 | 102 | 88 | 94 | 94 | 95 | 110 | 106 | 96 | 106 |
| Index of wet grip performance | 100 | 100 | 99 | 85 | 92 | 98 | 98 | 124 | 115 | 94 | 104 |

**Table 3**

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Compounding amount (part by mass) | | | | | | | | | | | |
| SBR 1 | 41.25 | 41.25 | 41.25 | 41.25 | 41.25 | 41.25 | 41.25 | 41.25 | 41.25 | 41.25 | 41.25 |
| SBR 2 | 30 | 30 | 30 | 30 | 30 | 30 | 30 | 30 | 30 | 30 | 30 |
| BR | 40 | 40 | 40 | 40 | 40 | 40 | 40 | 40 | 40 | 40 | 40 |
| Carbon black | 5 | 5 | 5 | 5 | 5 | 5 | 5 | 5 | 5 | 5 | 5 |
| Silica 1 | 110 | 110 | 110 | 110 | 110 | 110 | 110 | 110 | 110 | 110 | 110 |
| Silica 2 | - | - | - | - | - | - | - | - | - | - | - |
| Silane coupling agent | 8.8 | 8.8 | 8.8 | 8.8 | 8.8 | 8.8 | 8.8 | 8.8 | 8.8 | 8.8 | 8.8 |
| Aluminum hydroxide | - | - | - | - | - | - | - | - | - | - | - |
| Adhesive resin 1 | - | - | - | - | - | - | - | - | - | - | - |
| Adhesive resin 2 | - | - | - | - | - | - | - | - | - | - | - |
| Adhesive resin 3 | - | - | - | - | - | - | - | - | - | - | 10 |
| Adhesive resin 4 | 10 | 10 | 10 | 10 | 10 | 10 | 10 | 10 | 10 | 10 | - |
| Adhesive resin 5 | - | - | - | - | - | - | - | - | - | 20 | - |
| Process oil | 39 | 39 | 39 | 39 | 39 | 39 | 39 | 39 | 36 | 19 | 39 |
| Liquid polymer | - | - | - | - | - | - | - | - | - | - | - |
| Molten mixture 1 | - | - | - | - | - | - | - | - | - | - | - |
| Molten mixture 2 | - | 3 | - | - | - | - | - | - | - | - | - |
| Molten mixture 3 | - | - | 3 | - | - | - | - | - | - | - | - |
| Molten mixture 4 | 3 | - | - | - | - | - | - | 1 | 6 | 10 | 3 |
| Molten mixture 5 | - | - | - | 3 | - | - | - | - | - | - | - |
| Molten mixture 6 | - | - | - | - | 3 | - | - | - | - | - | - |
| Molten mixture 7 | - | - | - | - | - | 3 | - | - | - | - | - |
| Molten mixture 8 | - | - | - | - | - | - | - | - | - | - | - |
| Molten mixture 9 | - | - | - | - | - | - | - | - | - | - | - |
| Molten mixture 10 | - | - | - | - | - | - | - | - | - | - | - |
| Molten mixture 11 | - | - | - | - | - | - | 3 | - | - | - | - |
| Stearic acid | 2 | 3 | 2 | 2 | 2 | 2 | 2 | 2 | 2 | 2 | 2 |
| Zinc stearate | - | - | - | - | - | - | - | - | - | - | - |
| Mold releasing agent 1 | - | - | - | - | - | - | - | - | - | - | - |
| Mold releasing agent 2 | - | - | - | - | - | - | - | - | - | - | - |
| Mold releasing agent 3 | - | - | - | - | - | - | - | - | - | - | - |
| Antioxidant 1 | 2 | 2 | 2 | 2 | 2 | 2 | 2 | 2 | 2 | 2 | 2 |
| Antioxidant 2 | 1 | 1 | 1 | 1 | 1 | 1 | 1 | 1 | 1 | 1 | 1 |
| Wax | 1.5 | 1.5 | 1.5 | 1.5 | 1.5 | 1.5 | 1.5 | 1.5 | 1.5 | 1.5 | 1.5 |
| Zinc oxide | 2 | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 | 1.5 |
| Vulcanization accelerator 1 | 1.3 | 1.3 | 1.3 | 1.3 | 1.3 | 1.3 | 1.3 | 1.3 | 1.3 | 1.3 | 1.3 |
| Vulcanization accelerator 2 | 2.5 | 2.5 | 2.5 | 2.5 | 2.5 | 2.5 | 2.5 | 2.5 | 2.5 | 2.5 | 2.5 |

| Evaluation | | | | | | | | | | | |
|---|---|---|---|---|---|---|---|---|---|---|---|
| Index of viscosity | 110 | 101 | 107 | 110 | 114 | 107 | 108 | 106 | 105 | 100 | 115 |
| Index of mold release characteristics | 113 | 107 | 108 | 112 | 106 | 107 | 107 | 105 | 120 | 117 | 117 |
| Index of abrasion resistance | 109 | 102 | 104 | 106 | 106 | 106 | 101 | 109 | 101 | 100 | 115 |
| Index of wet grip performance | 107 | 102 | 103 | 104 | 104 | 104 | 102 | 107 | 106 | 100 | 115 |

**Table 4**

| | Example | | | | | |
|---|---|---|---|---|---|---|
| | 12 | 13 | 14 | 15 | 16 | 17 |
| Compounding amount (part by mass) | | | | | | |
| SBR 1 | 41.25 | 41.25 | 41.25 | 41.25 | 41.25 | 41.25 |
| SBR 2 | 30 | 30 | 30 | 30 | 30 | 30 |
| BR | 40 | 40 | 40 | 40 | 40 | 40 |
| Carbon black | 5 | 5 | 5 | 15 | 5 | 50 |
| Silica 1 | 110 | 110 | 110 | - | 107 | 70 |
| Silica 2 | - | - | - | 110 | - | - |
| Silane coupling agent | 8.8 | 8.8 | 8.8 | 8.8 | 8.8 | 8.8 |
| Aluminum hydroxide | - | - | - | - | 10 | 50 |
| Adhesive resin 1 | - | 20 | 20 | - | - | 20 |
| Adhesive resin 2 | 10 | - | - | - | - | - |
| Adhesive resin 3 | - | 20 | 29 | - | - | 20 |
| Adhesive resin 4 | - | - | - | 10 | 10 | - |
| Adhesive resin 5 | - | - | - | - | - | - |
| Process oil | 39 | 9 | - | 45 | 39 | 29 |
| Liquid polymer | - | - | - | - | - | 40 |
| Molten mixture 1 | - | - | - | - | - | - |
| Molten mixture 2 | - | - | - | - | - | - |
| Molten mixture 3 | - | - | - | - | - | - |
| Molten mixture 4 | 3 | 3 | 3 | 3 | 3 | 3 |
| Molten mixture 5 | - | - | - | - | - | - |
| Molten mixture 6 | - | - | - | - | - | - |
| Molten mixture 7 | - | - | - | - | - | - |
| Molten mixture 8 | - | - | - | - | - | - |
| Molten mixture 9 | - | - | - | - | - | - |
| Molten mixture 10 | - | - | - | - | - | - |
| Molten mixture 11 | - | - | - | - | - | - |
| Stearic acid | 2 | 2 | 2 | 2 | 2 | 2 |
| Zinc stearate | - | - | - | - | - | - |
| Mold releasing agent 1 | - | - | - | - | - | - |
| Mold releasing agent 2 | - | - | - | - | - | - |
| Mold releasing agent 3 | - | - | - | - | - | - |
| Antioxidant 1 | 2 | 2 | 2 | 2 | 2 | 2 |
| Antioxidant 2 | 1 | 1 | 1 | 1 | 1 | 1 |
| Wax | 1.5 | 1.5 | 1.5 | 1.5 | 1.5 | 1.5 |
| Zinc oxide | 2 | 2 | 2 | 2 | 2 | 2 |
| Sulfur | 1.5 | 1.5 | 1.5 | 1.5 | 1.5 | 1.5 |
| Vulcanization accelerator 1 | 1.3 | 1.3 | 1.3 | 1.3 | 1.3 | 1.3 |
| Vulcanization accelerator 2 | 2.5 | 2.5 | 2.5 | 2.5 | 2.5 | 2.5 |

| Evaluation | | | | | | |
|---|---|---|---|---|---|---|
| Index of viscosity | 118 | 125 | 130 | 108 | 108 | 100 |
| Index of mold release characteristics | 117 | 106 | 110 | 108 | 113 | 105 |
| Index of abrasion resistance | 115 | 125 | 122 | 111 | 105 | 100 |
| Index of wet grip performance | 110 | 130 | 120 | 113 | 119 | 140 |

**Table 5**

| | Comparative Example | | | | | | |
|---|---|---|---|---|---|---|---|
| | 12 | 13 | 14 | 15 | 16 | 17 | 18 |
| Compounding amount (part by mass) | | | | | | | |
| SBR 1 | 41.25 | 41.25 | 41.25 | 41.25 | 41.25 | 41.25 | 41.25 |
| SBR 2 | 30 | 30 | 30 | 30 | 30 | 30 | 30 |
| BR | 40 | 40 | 40 | 40 | 40 | 40 | 40 |
| Carbon black | 5 | 5 | 5 | 5 | 5 | 5 | 5 |
| Silica 1 | 110 | 110 | 110 | 110 | 110 | 110 | 110 |
| Silica 2 | - | - | - | - | - | - | - |
| Silane coupling agent | 8.8 | 8.8 | 8.8 | 8.8 | 8.8 | 8.8 | 8.8 |
| Aluminum hydroxide | - | - | - | - | - | - | - |
| Adhesive resin 1 | - | - | - | - | - | - | - |
| Adhesive resin 2 | - | - | - | - | - | - | - |
| Adhesive resin 3 | - | - | - | - | - | - | - |
| Adhesive resin 4 | - | - | - | - | - | - | - |
| Adhesive resin 5 | - | - | - | - | - | - | - |
| Process oil | 39 | 39 | 39 | 39 | 39 | 39 | 39 |
| Liquid polymer | - | - | - | - | - | - | - |
| Molten mixture 1 | - | - | - | - | - | - | - |
| Molten mixture 2 | - | 3 | - | - | - | - | - |
| Molten mixture 3 | - | - | 3 | - | - | - | - |
| Molten mixture 4 | 3 | - | - | - | - | - | - |
| Molten mixture 5 | - | - | - | 3 | - | - | - |
| Molten mixture 6 | - | - | - | - | 3 | - | - |
| Molten mixture 7 | - | - | - | - | - | 3 | - |
| Molten mixture 8 | - | - | - | - | - | - | - |
| Molten mixture 9 | - | - | - | - | - | - | - |
| Molten mixture 10 | - | - | - | - | - | - | - |
| Molten mixture 11 | - | - | - | - | - | - | 3 |
| Stearic acid | 2 | 3 | 2 | 2 | 2 | 2 | 2 |
| Zinc stearate | - | - | - | - | - | - | - |
| Mold releasing agent 1 | - | - | - | - | - | - | - |
| Mold releasing agent 2 | - | - | - | - | - | - | - |
| Mold releasing agent 3 | - | - | - | - | - | - | - |
| Antioxidant 1 | 2 | 2 | 2 | 2 | 2 | 2 | 2 |
| Antioxidant 2 | 1 | 1 | 1 | 1 | 1 | 1 | 1 |
| Wax | 1.5 | 1.5 | 1.5 | 1.5 | 1.5 | 1.5 | 1.5 |
| Zinc oxide | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator 1 | 1.3 | 1.3 | 1.3 | 1.3 | 1.3 | 1.3 | 1.3 |
| Vulcanization accelerator 2 | 2.5 | 2.5 | 2.5 | 2.5 | 2.5 | 2.5 | 2.5 |

| Evaluation | | | | | | | |
|---|---|---|---|---|---|---|---|
| Index of viscosity | 115 | 106 | 112 | 114 | 119 | 113 | 113 |
| Index of mold release characteristics | 123 | 117 | 118 | 121 | 115 | 116 | 117 |
| Index of abrasion resistance | 112 | 105 | 107 | 109 | 109 | 109 | 103 |
| Index of wet grip performance | 92 | 90 | 89 | 88 | 90 | 88 | 87 |

**Table 6**

| | Comparative Example | | | |
|---|---|---|---|---|
| | 19 | 20 | 21 | 22 |
| Compounding amount (part by mass) | | | | |
| SBR 1 | 41.25 | 41.25 | 41.25 | 41.25 |
| SBR 2 | 30 | 30 | 30 | 30 |
| BR | 40 | 40 | 40 | 40 |
| Carbon black | 5 | 5 | 5 | 5 |
| Silica 1 | 110 | 110 | 110 | 110 |
| Silica 2 | - | - | - | - |
| Silane coupling agent | 8.8 | 8.8 | 8.8 | 8.8 |
| Aluminum hydroxide | - | - | - | - |
| Non-adhesive resin 1 | 10 | - | - | - |
| Non-adhesive resin 2 | - | 10 | - | - |
| Non-adhesive resin 3 | - | - | 10 | - |
| Non-adhesive resin 4 | - | - | - | 10 |
| Process oil | 39 | 39 | 39 | 39 |
| Liquid polymer | - | - | - | - |
| Molten mixture 1 | - | - | - | - |
| Molten mixture 2 | - | - | - | - |
| Molten mixture 3 | - | - | - | - |
| Molten mixture 4 | 3 | 3 | 3 | 3 |
| Molten mixture 5 | - | - | - | - |
| Molten mixture 6 | - | - | - | - |
| Molten mixture 7 | - | - | - | - |
| Molten mixture 8 | - | - | - | - |
| Molten mixture 9 | - | - | - | - |
| Molten mixture 10 | - | - | - | - |
| Molten mixture 11 | - | - | - | - |

| Compounding amount part by mass) | | | | |
|---|---|---|---|---|
| Stearic acid | 2 | 3 | 2 | 2 |
| Zinc stearate | - | - | - | - |
| Mold releasing agent 1 | - | - | - | - |
| Mold releasing agent 2 | - | - | - | - |
| Mold releasing agent 3 | - | - | - | - |
| Antioxidant 1 | 2 | 2 | 2 | 2 |
| Antioxidant 2 | 1 | 1 | 1 | 1 |
| Wax | 1.5 | 1.5 | 1.5 | 1.5 |
| Zinc oxide | 2 | 2 | 2 | 2 |
| Sulfur | 1.5 | 1.5 | 1.5 | 1.5 |
| Vulcanization accelerator 1 | 1.3 | 1.3 | 1.3 | 1.3 |
| Vulcanization accelerator | 2.5 | 2.5 | 2.5 | 2.5 |
| Evaluation | | | | |
| Index of viscosity | 114 | 111 | 111 | 110 |
| Index of mold release characteristics | 135 | 130 | 132 | 129 |
| Index of abrasion resistance | 111 | 104 | 100 | 108 |
| Index of wet grip performance | 88 | 93 | 89 | 90 |

From the results shown in Tables 2 to 6, it is seen that the rubber composition of the present invention comprising predetermined amounts of ω-9 fatty acid amide and an adhesive resin is excellent in processability, mold release characteristics, abrasion resistance and wet grip performance.

## Claims

1. A tire comprising a tire member composed of a rubber composition, the tire member being a tread, an under tread, a carcass, or a side wall, the rubber composition comprising:
0.1 to 10 parts by mass of ω-9 fatty acid amide and
0.1 to 100 parts by mass of an adhesive resin
based on 100 parts by mass of a rubber component,
wherein the adhesive resin is at least one selected from the group consisting of a phenolic resin, a coumarone-indene resin, a terpene resin, a styrene resin, an acrylic resin, and a rosin resin.

2. The tire of claim 1, wherein the rubber composition comprises the ω-9 fatty acid amide in the form of a molten mixture comprising the ω-9 fatty acid amide and calcium stearate.

3. The tire of claim 2, wherein the molten mixture is a molten mixture comprising 25 to 75% by mass of ω-9 fatty acid amide and 25 to 75% by mass of calcium stearate.

4. The tire of any one of claims 1 to 3, wherein the rubber composition comprises:
an adhesive resin having a softening point of 130°C or lower and
at least one of a process oil and a liquid polymer,
wherein a total content of the adhesive resin having a softening point of 130°C or lower, the process oil and the liquid polymer is not less than 20 parts by mass.

5. The tire of any one of claims 1 to 4, wherein the rubber composition comprises not less than 9 parts by mass of a process oil.

## Patentansprüche

1. Reifen, der ein aus einer Kautschukzusammensetzung bestehendes Reifenelement umfasst, wobei das Reifenelement eine Lauffläche, eine Unterlauffläche, eine Karkasse oder eine Seitenwand ist, wobei die Kautschukzusammensetzung umfasst:
0,1 bis 10 Masseteile von ω-9-Fettsäureamid und
0,1 bis 100 Masseteile eines Adhäsivharzes
bezogen auf 100 Masseteile einer Kautschukkomponente,
wobei das Adhäsivharz mindestens eines ist, ausgewählt aus der Gruppe bestehend aus einem Phenolharz, einem Cumaron-Indenharz, einem Terpenharz, einem Styrolharz, einem Acrylharz und einem Kolophoniumharz.

2. Reifen nach Anspruch 1, wobei die Kautschukzusammensetzung das ω-9-Fettsäureamid in der Form eines geschmolzenen Gemischs umfasst, welches das ω-9-Fettsäureamid und Calciumstearat umfasst.

3. Reifen nach Anspruch 2, wobei das geschmolzene Gemisch ein geschmolzenes Gemisch ist, das 25 bis 75 Masse-% von ω-9-Fettsäureamid und 25 bis 75 Masse-% von Calciumstearat umfasst.

4. Reifen nach einem der Ansprüche 1 bis 3, wobei die Kautschukzusammensetzung umfasst:
ein Adhäsivharz, das einen Erweichungspunkt von 130°C oder niedriger aufweist und
mindestens eines aus einem Prozessöl und einem flüssigen Polymer,
wobei ein Gesamtgehalt des einen Erweichungspunkt von 130°C oder weniger aufweisenden Adhäsivharzes, des Prozessöls und des flüssigen Polymers nicht weniger als 20 Masseteile ist.

5. Reifen nach einem der Ansprüche 1 bis 4, wobei die Kautschukzusammensetzung nicht weniger als 9 Masseteile eines Prozessöls umfasst.

## Revendications

1. Pneu comprenant un élément de pneu composé d'une composition de caoutchouc, l'élément de pneu étant une bande de roulement, une sous-bande de roulement, une carcasse ou un flanc, la composition de caoutchouc comprenant :
0,1 à 10 parties en masse d'amide d'acide gras ω-9 et
0,1 à 100 parties en masse d'une résine adhésive
sur la base de 100 parties en masse d'un composant de caoutchouc,
dans lequel la résine adhésive est au moins une choisie parmi le groupe constitué d'une résine phénolique, d'une résine coumarone-indène, d'une résine terpénique, d'une résine styrénique, d'une résine acrylique et d'une résine de colophane.

2. Pneu selon la revendication 1, dans lequel la composition de caoutchouc comprend l'amide d'acide gras ω-9 sous la forme d'un mélange fondu comprenant l'amide d'acide gras ω-9 et du stéarate de calcium.

3. Pneu selon la revendication 2, dans lequel le mélange fondu est un mélange fondu comprenant 25 à 75 % en masse d'amide d'acide gras ω-9 et 25 à 75 % en masse de stéarate de calcium.

4. Pneu selon l'une quelconque des revendications 1 à 3, dans lequel la composition de caoutchouc comprend :
une résine adhésive ayant un point de ramollissement de 130°C ou plus bas ; et
au moins un parmi une huile de traitement et un polymère liquide,
dans lequel une teneur totale en résine adhésive ayant un point de ramollissement de 130°C ou plus bas, en huile de traitement et en polymère liquide n'est pas inférieure à 20 parties en masse.

5. Pneu selon l'une quelconque des revendications 1 à 4, dans lequel la composition de caoutchouc comprend pas moins que 9 parties en masse d'un huile de traitement.
